# EUROPÄISCHE PATENTSCHRIFT

(11) **EP 2 860 042 B1**
(45) Veröffentlichungstag und Bekanntmachung des Hinweises auf die Patenterteilung: **27.07.2016**
(21) Anmeldenummer: 14003498.4
(22) Anmeldetag: 10.10.2014
(51) Int. Cl.: B42D 25/351, B32B 27/06, B32B 29/00, D21H 21/42, B42D 25/47, B26D 3/00, B65H 23/02, B32B 7/12, B32B 27/10, B32B 27/32, B32B 27/34, B32B 27/36, B65H 23/188, B65H 39/16

(54) **Verfahren und Vorrichtung zum Herstellen eines Wertdokumentensubstrats**
Method and device for producing a valuable document substrate
Procédé et dispositif de fabrication d'un substrat de document de valeur

(30) Priorität: 11.10.2013 DE 102013016901
(43) Veröffentlichungstag der Anmeldung: 15.04.2015
(73) Patentinhaber: Giesecke & Devrient GmbH, 81677 München (DE)
(72) Erfinder: Fuhse, Christian, 83624 Otterfing (DE); Renner, Patrick, 83677 Reichersbeuern (DE)

(56) Entgegenhaltungen:
- EP-A1- 2 295 234
- WO-A1-2013/048875

## Beschreibung

Die Erfindung betrifft ein Verfahren zum Herstellen eines Wertdokumentensubstrats mit einer flächigen Kernschicht, in der zumindest zwei unterschiedliche Kernschichtmaterialien in Teilbereichen nebeneinander angeordnet sind. Die Erfindung betrifft weiter eine Vorrichtung zur Durchführung eines solchen Verfahrens.

Für die Herstellung von Banknoten sind im Stand der Technik insbesondere Papiersubstrate, Foliensubstrate und sogenannte Hybridsubstrate bekannt, die aus einer Kombination aus Papier und Folie bestehen. Jede dieser Substratarten hat dabei ihre eigenen Stärken und Schwächen. Beispielsweise gelten Foliensubstrate als besonders beständig und verschmutzungsunempfindlich, während Papiersubstrate insbesondere durch bereits in das Papier integrierte hochwertige Sicherheitsmerkmale, wie Wasserzeichen und eingebettete Sicherheitsfäden, als besonders sicher angesehen werden. Hybridsubstrate können diese Stärken verbinden, indem beispielsweise ein mit entsprechenden Sicherheitsmerkmalen ausgestattetes Papiersubstrat zwischen dünne Schutzfolien kaschiert wird. Auch die umgekehrte Variante mit einem Folienkern und beidseitig aufgebrachtem Papier ist bekannt.

Weiter werden in Banknoten oft transparente Bereiche, sogenannte Fenster, eingebracht. Ein solches Fenster erhöht die Sicherheit einer Banknote, da es leicht zu verifizieren und von einem Fälscher schwer nachstellbar ist und insbesondere nicht mit Farbkopierern kopiert werden kann. Die Realisierung solcher Fenster ist bei Folienbanknoten vergleichsweise einfach, da das Substrat an sich bereits transparent sein kann und im Bereich des Fensters lediglich die sonst üblichen nicht-transparenten Beschichtungen ausgespart werden müssen. Auf Foliensubstraten sind Form und Größe der Fenster praktisch keine Grenzen gesetzt. Auch sehr große Fenster, die sich streifenförmig über die gesamte Höhe der Banknoten erstrecken, wurden bereits verwirklicht.

In Papiersubstrate sind Fenster schwieriger zu integrieren, da Papier nicht einfach transparent gemacht werden kann, sondern für diesen Zweck Löcher im Papier erzeugt werden müssen. Diese Löcher müssen dann mit einer transparenten Folie überdeckt werden. Bei Hybridsubstraten kann diese Folie vorteilhaft beispielsweise die ohnehin vorgesehene Schutz- oder Kernfolie sein. Während sich auf diese Weise kleine Fenster noch relativ einfach erzeugen lassen, ergeben sich bei großen Fenstern, und insbesondere bei sich über die gesamte Höhe einer Banknote oder eines anderen Wertdokuments erstreckenden Fenstern jedoch größere Probleme, beispielsweise mit der mechanischen Stabilität. Besteht eine Hybridbanknote beispielsweise aus einem Papierkern und beidseitig 6 µm dicken Folien und wird im Bereich eines durchgehenden Fensters das Papier ausgespart, so weist die Note in diesem Bereich eine deutlich geringere Stabilität auf, da der tragende Papierkern dort fehlt. Darüber hinaus ist die Gesamtdicke des Substrats in dem Bereich ohne Papierkern wesentlich kleiner als außerhalb, was zu Problemen bei der Verarbeitung, beispielsweise der Kaschierqualität, einer schlechten Planlage oder einer schlechten Bedruckbarkeit führen kann.

Zur Umgehung dieser Probleme wurde in der Druckschrift EP 2 295 234 A1 vorgeschlagen, den bereichsweise fehlenden Papierkern durch eine etwa gleich dicke transparente Folie zu ersetzen, die sowohl für eine gleichmäßige Dicke als auch eine ausreichende mechanische Stabilität des Substrats sorgen soll. Offenbart ist ein Substrat mit einer Kernschicht, bestehend aus nebeneinander angeordneten Segmenten unterschiedlicher Materialien, die sich über die gesamte Länge oder Breite des Substrats erstrecken. Zur Herstellung solcher Substrate wird zunächst beispielsweise ein Folienstreifen ohne Klebstoff auf ein vollflächiges Papiersubstrat aufgebracht und dann eine Deckfolie vollflächig über das Papier bzw. den Folienstreifen aufgeklebt. Im Bereich des Folienstreifens wird das Papier dann von der Papierseite aus herausgeschnitten. Dieser Schnitt muss so erfolgen, dass zwar das Papier ausreichend weit eingeschnitten wird, gleichzeitig die Deckfolie aber nicht beschädigt oder gar durchtrennt wird. Zudem muss der Schnitt auch in der Ebene des Substrats mit sehr genauer Positionierung erfolgen, so dass sich am Ende Papier und Polymerstreifen möglichst nicht überlappen, dennoch der Schnitt aber nicht bereits in dem Bereich erfolgt, in dem die Klebstoffschicht zwischen Deckfolie und Papier vorliegt. Dieses Verfahren ist in der Praxis somit insbesondere mit Blick auf das Schneiden technisch sehr anspruchsvoll.

Ausgehend davon liegt der Erfindung die Aufgabe zugrunde, ein Herstellungsverfahren bereitzustellen, das eine einfache und zuverlässige Herstellung von Wertdokumentensubstraten der eingangs genannten Art erlaubt. Insbesondere soll das Verfahren eine einfache und zuverlässige Herstellung von Banknotensubstraten mit in einer Richtung durchgehenden Papier- und Folienbereichen erlauben.

Diese Aufgabe wird durch die Merkmale der unabhängigen Ansprüche gelöst. Weiterbildungen der Erfindung sind Gegenstand der abhängigen Ansprüche.

Die Erfindung enthält ein Verfahren zum Herstellen eines Wertdokumentensubstrats mit einer flächigen Kernschicht, in der zumindest zwei unterschiedliche Kernschichtmaterialien in Teilbereichen nebeneinander angeordnet sind, wobei bei dem Verfahren
B) ein flächiges erstes Kernschichtmaterial und ein unterschiedliches, flächiges zweites Kernschichtmaterial bereitgestellt wird,
A) die flächigen ersten und zweiten Kernschichtmaterialien übereinander angeordnet werden,
S) die übereinander angeordneten Kernschichtmaterialien gleichzeitig und mit deckungsgleichen Schnitten streifenförmig geschnitten werden,
E) ein Teil des geschnittenen ersten Kernschichtmaterials und ein komplementärer Teil des geschnittenen zweiten Kernschichtmaterials entfernt werden, und
F) die nicht entfernten komplementären Teile des ersten und zweiten Kernschichtmaterials auf eine Deckfolie aufgebracht und relativ zueinander fixiert werden, so dass das erste und zweite Kernschichtmaterial nebeneinander angeordnete Teilbereiche der flächigen Kernschicht des Wertdokumentensubstrats bilden.

Durch die deckungsgleichen Schnitte in den beiden Kernschichtmaterialien entsteht in den übereinander angeordneten Kernschichtmaterialien jeweils dieselbe Abfolge von Streifen. Die Wendung, dass komplementäre Teile des ersten und zweiten Kernschichtmaterials entfernt werden bedeutet dann, dass diejenigen Streifen der Streifenfolge, die in dem ersten Material entfernt werden, im zweiten Material nicht entfernt werden und umgekehrt. Im einfachsten Fall werden Steifen jeweils alternierend aus dem ersten und zweiten Kernschichtmaterial entfernt. Werden die Kernschichtmaterialien beispielsweise jeweils in 7 Streifen geschnitten, so werden aus dem ersten Kernschichtmaterial die 2., 4. und 6. Streifen entfernt und aus dem zweiten Kernschichtmaterial komplementär dazu die 1., 3., 5. und 7. Streifen. Die Rolle des ersten und zweiten Kernschichtmaterials kann dabei natürlich vertauscht werden. Für andere Schnitte mit einer anderen Anzahl an Streifen verläuft das Vorgehen analog.

Die flächigen Kernschichtmaterialien können in Schritt A) unverbunden übereinander angeordnet werden, beispielsweise können die beiden Materialien in Bahnform bereitgestellt und durch Walzen zusammengedrückt werden. In vorteilhaften Ausgestaltungen werden das flächige erste und zweite Kernschichtmaterial jedoch wieder lösbar verklebt. Die Klebung muss dabei so ausgeführt werden, dass die in Streifen geschnittenen Kernschichtmaterialien in Schritt E) problemlos wieder aus dem Klebeverbund gelöst und entfernt werden können.

In einer bevorzugten Ausgestaltung des Verfahrens wird im Schritt B) als erstes Kernschichtmaterial ein opakes Kernschichtmaterial, insbesondere eine Papierbahn oder ein Papierbogen, bereitgestellt, und wird als zweites Kernschichtmaterial ein zumindest bereichsweise transparentes Kernschichtmaterial, insbesondere eine Folienbahn oder ein Folienbogen, bereitgestellt. In anderen Gestaltungen kann es sich bei den Kernschichtmaterialien bereits selbst um einen Verbund handeln, insbesondere um einen Folie/Folie-, Folie/Papier- oder Papier/Papier-Verbund. Bei dem Folienmaterial kann es sich jeweils um natürliche Polymere, wie etwa Polysaccharide, wie Stärke und Zellstoff, und/ oder um synthetische Polymere, wie etwa Polypropylen, Polyamid, Polyethylen oder Polyester, handeln.

In anderen, ebenfalls vorteilhaften Gestaltungen können beispielsweise auch ein Papier und eine Metallfolie, zwei unterschiedliche Polymerfolien, beispielsweise mit unterschiedlichen optischen Eigenschaften, wie etwa unterschiedlichen Polarisationseigenschaften, oder zwei verschiedene Papiere in unterschiedlichen Flächenbereichen der Kernschicht angeordnet werden. Selbstverständlich können auch mehr als zwei unterschiedliche Kernschichtmaterialien in der flächigen Kernschicht nebeneinander angeordnet werden.

Gegenwärtig ist eine flächige Kernschicht bevorzugt, die aus den Kernschichtmaterialien Papier und Folie gebildet ist. Dabei haben sich folgende Eigenschaften als besonders vorteilhaft herausgestellt: Die Papierstreifen weisen ein Flächengewicht von 20 g/m² bis 120 g/m², vorzugsweise 60 g/m² bis 80 g/m² bzw. eine Papierdicke von 20 µm bis 140 µm, vorzugsweise von 70 µm bis 90 µm auf. Die Folienstreifen sind aus Polyester (PET/ Polyethylenterephthalat), Polypropylen (BOPP) oder Polyamid (PA) mit einer Dicke von 20 µm bis 140 µm, vorzugsweise 70 µm bis 90 µm gebildet.

Mit Vorteil werden das erste und zweite Kernschichtmaterial mit im Wesentlichen gleicher Dicke bereitgestellt, worunter eine Dickenabweichung von weniger als 30%, insbesondere von weniger als 10%, besonders bevorzugt von weniger als 5% verstanden wird.

Das erfindungsgemäße Verfahren eignet sich besonders gut für einen Rolle-zu-Rolle-Prozess, bei welchem im Schritt B) die Kernschichtmaterialien jeweils als Rollenmaterial bereitgestellt werden und die Herstellung des Wertdokumentensubstrats in einem Rolle-zu-Rolle-Prozess erfolgt. Allerdings ist eine solche Ausgestaltung zwar gegenwärtig bevorzugt, jedoch nicht zwingend. Vielmehr kann auch eines oder sogar beide der Kernschichtmaterialien in Form von Bögen bereitgestellt werden. Wird beispielsweise Papier als erstes Kernschichtmaterial in Form von Bögen und Folie als zweites Kernschichtmaterial als eine breite Bahn von der Rolle bereitgestellt, so kann es vorteilhaft sein, Folie und Papier für einen stabileren Prozess leicht mit einander zu verkleben. Auch hier erfolgt die Verklebung so, dass Papier und Folie nach dem Schnitt wieder voneinander getrennt werden können.

Zumindest eines der Kernschichtmaterialien kann auch in Form mehrerer Streifen bereitgestellt werden, die insbesondere nur wenig breiter als die entsprechenden späteren Teilbereiche im fertigen Kernschichtmaterial sind. Dadurch können insbesondere bei Verwendung kostspieliger Materialien, wie etwa Hologrammfolien, Materialkosten gespart werden, wie weiter unten genauer erläutert.

Im Schritt F) werden nach einer zweckmäßigen Weiterbildung der Erfindung die nicht entfernten komplementären Teile des ersten und zweiten Kernschichtmaterials auf die Deckfolie geklebt, insbesondere mit Hilfe eines Kaschierklebers. Dabei hat es sich als vorteilhaft herausgestellt, wenn im Schritt F) die nicht entfernten komplementären Teile des ersten und zweiten Kernschichtmaterials Stoß an Stoß auf der Deckfolie fixiert werden.

Verbleibt im Schritt F) zwischen einem ersten und einem zweiten Kernschichtmaterial ein Schnittspalt, so kann dieser Schnittspalt mit Vorteil vor, bei oder nach dem Aufbringen der Kernschichtmaterialien auf die Deckfolie mit einem Klebstoff aufgefüllt werden. Die Auffüllung von Schnittspalten mit Klebstoff erfolgt vorzugsweise mittels Düsentechnologie, wie weiter unten genauer beschrieben.

Die übereinander angeordneten Kernschichtmaterialien werden im Schritt S) vorteilhaft mit Messern oder mittels Laserstrahlung geschnitten. Dabei ist in einer vorteilhaften Erfindungsvariante vorgesehen, dass die übereinander angeordneten Kernschichtmaterialien im Schritt S) in Form paralleler Streifen geschnitten werden. In einer anderen, ebenfalls vorteilhaften Erfindungsvariante ist vorgesehen, dass die übereinander angeordneten Kernschichtmaterialien im Schritt S) in Form von Streifen mit nichtparallelen Streifenrändern, insbesondere in Form von Streifen mit zacken- oder wellenförmigen Streifenrändern geschnitten werden. Dabei kann die Breite der Streifen konstant bleiben oder variieren. Eine Ausbildung mit zacken- oder wellenförmigen Streifenrändern führt insbesondere zu einer größeren mechanischen Stabilität des Substrats, da die ihre Richtung wechselnden Streifenränder einem Abknicken des fertigen Wertdokuments entlang der Streifengrenze entgegenwirken.

In einer vorteilhaften Weiterbildung des erfindungsgemäßen Verfahrens werden im Schritt A) die Kernschichtmaterialien in ihrer relativen Position zueinander gepassert. Vorzugsweise werden zusätzlich oder alternativ auch im Schritt S) die Position des Streifenschnitts und eines oder beider Kernschichtmaterialien zueinander gepassert. Durch diese Maßnahmen kann sichergestellt werden, dass die fertigen Wertdokumentsubstrate alle dasselbe Erscheinungsbild aufweisen. Dies ist insbesondere dann wünschenswert, wenn eines oder beide der Kernschichtmaterialien mit Druckbildern oder Sicherheitsmerkmalen ausgestattet sind, die in den fertigen Wertdokumenten stets an derselben Stelle liegen sollen.

Um eine solche Passerung zu verwirklichen, sind in einer vorteilhaften Gestaltungen Positionsmarken auf zumindest einem der Kernschichtmaterialien vorgesehen, die ausgelesen, ausgewertet und zur Steuerung der relativen Position der Kernschichtmaterialien in Schritt A) und/oder zur Steuerung der relativen Position von Streifenschnitt und Kernschichtmaterialien im Schritt S) verwendet werden.

In einer vorteilhaften Ausgestaltung wird im Schritt A) zumindest ein Kernschichtmaterial bereitgestellt, das bedruckt oder mit zumindest einem Sicherheitselement versehen ist. Im Papier können dabei insbesondere Wasserzeichen, Sicherheitsfäden, Melierfasern oder weitere, vor allem maschinenlesbare Sicherheitselemente vorgesehen sein. Der Einsatz von Kernschichtmaterialien, die bereits mit Aufdrucken oder Sicherheitselementen versehen sind, bietet sich insbesondere für Folienmaterialien an, die als Folienkern in das Wertdokumentsubstrat integriert werden sollen.

Grundsätzlich kann der Substratbereich mit dem Folienkern auch als einfacher transparenter Bereich ausgelegt sein. In vorteilhaften Gestaltungen ist die Folie aber ganz oder bereichsweise mit einer oder mehreren deckenden oder lasierenden Farben beschichtet. Die Farben oder Lacke können auch effektpigmentiert sein. Anstelle einer transparenten, klaren Folie kann auch eine farbige, semitransparente oder opake, helle oder dunkle Folie benutzt werden. Grundsätzlich können in einem Folienkern des Wertdokumentsubstrats alle Sicherheitselemente untergebracht werden, die für Banknoten mit folienbasierten Sicherheitsstreifen, Sicherheitsfäden oder Sicherheitspatches bekannt sind. Mit Vorteil kommen insbesondere folgende Sicherheitsmerkmale auf bzw. in der Folie zum Einsatz:
- Folie mit Volumenhologramm: Die Folie kann ein Volumenhologramm tragen. Ein besonderer Vorteil hierbei ist, dass Volumenhologramme für eine hohe Sichtbarkeit oft relativ dick sein müssen, was für aufgeklebte Streifen problematisch sein kann. Dieses Problem wird durch die erfindungsgemäße Einbettung eines entsprechenden Folienkerns in das Wertdokumentsubstrat statt des Aufklebens eines dicken Streifens gelöst;
- Prägehologramme oder mikrospiegelbasierte Sicherheitselemente, insbesondere mit metallischer oder hochbrechender Beschichtung;
- Flüssigkristalle;
- farbkippende Farben oder Beschichtungen, insbesondere Metallisierungen. Auch Beschichtungen mit unterschiedlichen Farben in Auf- und Durchsicht können verwendet werden;
- Moiré-Magnifier und Linsenkippbilder. Auch hier ist es von Vorteil, dass die Folie bei dem erfindungsgemäßen Verfahren gegenüber aufgeklebten Folienstreifen oder eingebetteten Sicherheitsfäden deutlich dicker sein kann. Dadurch sind größere Linsendurchmesser und Mikrobildabmessungen möglich, was die Herstellung vereinfacht und beispielsweise die Erzeugung der Mikrobilder durch Druckverfahren, wie etwa Offsetdruck, ermöglicht.

Weiter kann eine Folie als eines der Kernschichtmaterialien auch dazu dienen, zusammen mit zusätzlichen, außen auf dem Wertdokumentsubstrat vorgesehenen Merkmalen ein Sicherheitsmerkmal zu bilden. Beispiele für solche Ausgestaltungen sind:
- Die Folie dient als Abstandshalter für Moiré-Magnifier, Linsenkippbilder und dergleichen. Die Folie kann dabei beispielsweise bereits Vergrößerungselemente, wie Mikrolinsen- oder Mikrohohlspiegelarrays, und/oder die entsprechenden Mikrobilder tragen. Alternativ können diese außen am Verbund aufgebracht werden. Es sind dabei auch Ausgestaltungen möglich, die eine Selbstverifikation des fertigen Wertdokuments erlauben, beispielsweise indem die Linsen über der einkaschierten Kernfolie in einem ersten Bereich einer Banknote angebracht sind und die Mikrobilder in einem anderen Bereich der Banknote. Durch Falten der Note können diese Bereiche dann übereinander gebracht werden, wodurch eine sonst versteckte Darstellung in Erscheinung tritt.
- Es wird eine Folie mit polarisierenden Eigenschaften benutzt: Beispielsweise kann die Folie als Polarisationsfilter ausgelegt sein und für die (Selbst-)Verifikation anderer polarisierender Sicherheitselemente auf demselben oder einem anderen Wertdokument genutzt werden.
- Es werden Metallicfarben mit Spiegeleffekt eingesetzt, die vom Betrachter aus vorzugsweise auf der Rückseite der Folie oder innen liegend in einem Folienverbund angeordnet sind. Die Metallicfarbe ist einseitig teilweise oder vollflächig mit einer weißen Farbannahmeschicht überdruckt. Innen liegende Farbaufdrucke sind besonders gut schützt und bilden ein hochbeständiges Echtheitsmerkmal.

In vorteilhaften Ausgestaltungen wird in oder nach Schritt F) noch eine zweite Deckfolie auf die der ersten Deckfolie gegenüberliegende Fläche der flächigen Kernschicht aufgebracht, insbesondere aufkaschiert. Die Deckfolie(n) können insbesondere aus Polyester (PET/Polyethylenterephthalat) oder Polypropylen (BOPP) mit einer Dicke von 3 µm bis 30 µm, vorzugsweise 4,5 µm bis 8 µm bestehen. Im Fall solcher relativ dünner Deckfolien dienen die Deckfolien in erster Linie als Schutz vor Verschmutzung. Zusätzlich verbessern sie die mechanische Stabilität des Wertdokumentsubstrats bzw. des Wertdokuments, indem sie insbesondere die Lappigkeit und Einreißfestigkeit einer Umlaufnote verbessern. Alternativ können die Deckfolien auch relativ dick mit Dicken zwischen 10 µm und 70 µm, vorzugsweise 30 µm bis 50 µm ausgeführt sein und sind dann vorzugsweise mit relativ dünnem Papier bzw. dünner Folie im Kern kombiniert und übernehmen die Funktion einer bereits für sich die mechanische Festigkeit weitgehend bereitstellenden Trägerfolie.

In vorteilhaften Gestaltungen wird durch das erfindungsgemäße Verfahren eine flächige Kernschicht mit in einer Richtung durchgehenden Streifen aus dem ersten und zweiten Kernschichtmaterial gebildet. Dabei können die Streifen so ausgebildet sein, dass sie auch nach dem Vereinzeln der Einzelnutzen im fertigen Wertdokument von der Oberseite zur Unterseite des Wertdokuments durchgehen. Wie weiter unten genauer erläutert, ist es allerdings auch möglich, den Streifenschnitt bei der Herstellung so auszuführen, dass die geschnittenen Streifen bei der Vereinzelung in nicht zusammenhängende Teilbereiche auf dem Wertdokument zerlegt werden.

Durch das erfindungsgemäße Verfahren wird mit Vorteil ein Wertdokumentensubstrat mit einer flächigen Kernschicht aus zwei unterschiedlichen Kernschichtmaterialien erzeugt, bei dem der Flächenanteil des zweiten Kernschichtmaterials zwischen 0,5% und 60%, vorzugsweise zwischen 5% und 50%, besonders bevorzugt zwischen 10% und 50% liegt. Dies gilt insbesondere für die Varianten, bei denen das erste Kernschichtmaterial durch Papier und das zweite Kernschichtmaterial durch eine Folie gebildet ist.

Insgesamt können durch das erfindungsgemäße Verfahren Wertdokumentsubstrate, insbesondere Banknotensubstrate, mit vergleichsweise großen und durchgehenden transparenten Bereichen (Fenster) in Hybrid- und Papiersubstraten realisiert werden, wie sie derzeit nur von reinen Foliensubstraten bekannt sind. Durch das Einbringen einer Kernfolie in die flächige Kernschicht wird der Fensterbereich zudem mechanisch stabilisiert und kann bei entsprechender Folienwahl auch eine vergleichsweise große Dicke aufweisen. Letzteres kann insbesondere für mikrolinsenbasierte Sicherheitsmerkmale, wie etwa Moiré-Magnifier oder Kippbilder, zusätzliche Vorteile bieten.

Die Erfindung enthält auch eine Vorrichtung zur Durchführung des beschriebenen Verfahrens, mit
- einer Einlaufeinrichtung zum Übereinander-Anordnen der flächigen ersten und zweiten Kernschichtmaterialien,
- einer Schneideeinrichtung zum gleichzeitigen und deckungsgleichen Schneiden der übereinander angeordneten Kernschichtmaterialien in Streifen,
- einer Abführeinrichtung zum Entfernen eines Teils des geschnittenen ersten Kernschichtmaterials und eines komplementären Teils des geschnittenen zweiten Kernschichtmaterials, und
- einer Zusammenführungseinrichtung zum Zusammenführen und Fixieren der nicht entfernten komplementären Teile des ersten und zweiten Kernschichtmaterials auf der Deckfolie.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch eine erfindungsgemäß hergestellte Folienverbundbanknote in Aufsicht,
- Fig. 2: die Folienverbundbanknote der Fig. 1 im Querschnitt entlang der Linie II-II von Fig. 1,
- Fig. 3: schematisch den Aufbau einer erfindungsgemäßen Herstellungsvorrichtung,
- Fig. 4: in (a) bis (e) Querschnitte durch die Papier- und Folienbahn senkrecht zur Laufrichtung für verschiedene Zwischenstadien der Herstellung mit der Vorrichtung der Fig. 3,
- Fig. 5: in (a) bis (d) Aufsichten auf einen Ausschnitt erfindungsgemäßer Kernschichtbahnen mit drei Nutzen in Bahnquerrichtung,
- Fig. 6: in (a) bis (c) Querschnitte durch die Papier- und Folienbahn wie in Fig. 4(a) bis (c) für eine Abwandlung des dort gezeigten Prozesses,
- Fig. 7: in (a) bis (c) weitere vorteilhafte Varianten eines fertigen Wertdokumentsubstrats im Querschnitt, und
- Fig. 8: in (a) eine Aufsicht auf einen Ausschnitt einer erfindungsgemäßen Kernschichtbahn, und in (b) einen Einzelnutzen der Kernschichtbahn von (a) nach der Vereinzelung.

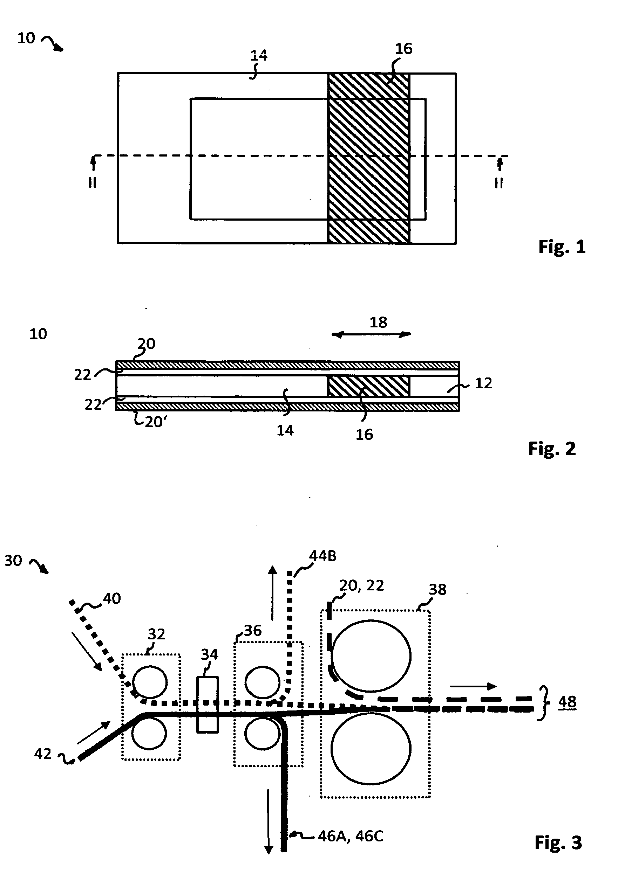

Die Erfindung wird nun am Beispiel der Herstellung von Folienverbundbanknoten erläutert. Figuren 1 und 2 zeigen dazu schematisch eine erfindungsgemäß hergestellte Folienverbundbanknote 10, wobei Fig. 1 die Banknote 10 in Aufsicht und Fig. 2 einen Querschnitt der Banknote 10 entlang der Linie II-II von Fig. 1 zeigt.

Das Substrat der Banknote 10 ist durch eine flächige Kernschicht 12 gebildet, in der zwei unterschiedliche Kernschichtmaterialien 14,16 Stoß an Stoß nebeneinanderliegen. Im Ausführungsbeispiel handelt es sich bei dem ersten Kernschichtmaterial 14 um Papier und bei dem zweiten Kernschichtmaterial 16 um eine transparente Kunststofffolie aus Polyester, Polypropylen oder Polyamid. Zum Schutz der Kernschicht 12 ist diese auf beiden Seiten jeweils mit einer dünnen transparenten Deckfolie 20, 20' aus Polyester oder Polypropylen abgedeckt, die jeweils über eine Schicht eines Kaschierklebers 22 mit der Kernschicht 12 verbunden ist.

Im Bereich 18 der Kernschichtfolie 16 wird auf diese Weise ein großflächiges streifenförmiges Fenster in der Banknote 10 gebildet, das sich über die gesamte Höhe der Banknote erstreckt und das typischerweise mit geeigneten, von folienbasierten Sicherheitsstreifen bekannten Sicherheitselementen ausgestattet ist.

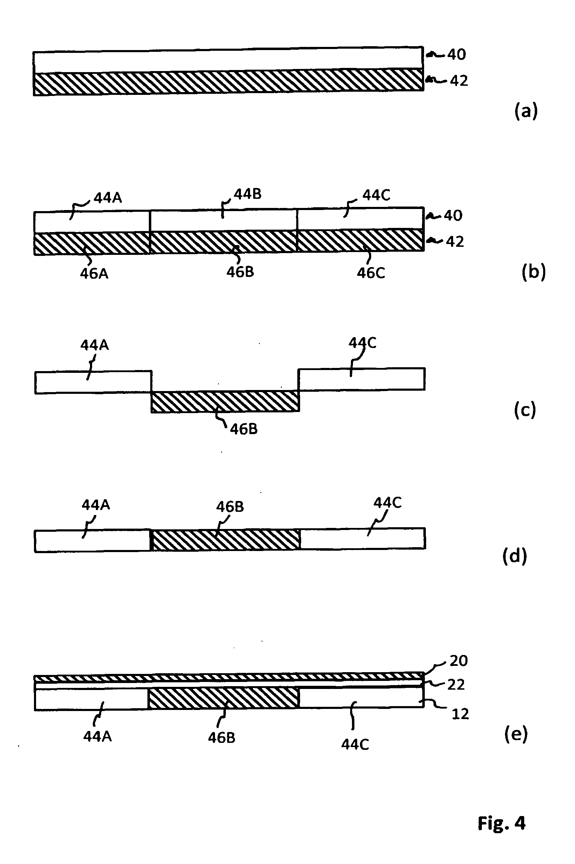

Die erfindungsgemäße Herstellung solcher Folienverbundbanknoten 10 wird anhand eines Ausführungsbeispiels nun mit Bezug auf die Figuren 3 und 4 genauer beschrieben. Fig. 3 zeigt dabei schematisch den Aufbau einer Herstellungsvorrichtung 30 und Fig. 4 zeigt in (a) bis (e) Querschnitte durch die Papier- und Folienbahn senkrecht zur Laufrichtung für verschiedene Zwischenstadien des Herstellungsprozesses.

Bei dem im Ausführungsbeispiel beschriebenen Verfahren handelt es sich um einen Rolle-zu-Rolle-Prozess, bei dem eine Papierbahn 40 und eine Folienbahn 42 jeweils von einer selbst nicht dargestellten Rolle bereitgestellt werden. Die Laufrichtung der Bahnen ist in Fig. 3 durch Pfeile angezeigt. Zunächst werden die einlaufende Papierbahn 40 und die Folienbahn 42 in einer Einlaufeinrichtung 32 durch zwei Walzen zusammengedrückt, so dass die beiden Bahnen direkt übereinanderliegen, wie im Querschnitt der Fig. 4(a) gezeigt. Optional können die Bahnen 40,42 in diesem Schritt auch schwach und leicht wieder lösbar verklebt werden.

Die nunmehr übereinanderliegenden Bahnen 40, 42 laufen dann zu einer Schneideeinrichtung 34, die beispielsweise durch Messer oder eine Laserschneideeinrichtung gebildet sein kann. In der Schneideeinrichtung 34 werden die Bahnen 40, 42 gleichzeitig und mit deckungsgleichen Schnitten in Streifen 44A, 44B, 44C (Papierbahn 40) bzw. in Streifen 46A, 46B, 46C (Folienbahn 42) geschnitten, wie in Fig. 4(b) illustriert. In Fig. 4(b) ist zur Illustration ein Schnitt in drei parallele Streifen gezeigt, die Bahnen 40, 42 werden jedoch im Allgemeinen in mehrere Streifen bzw. in Streifen mit komplexerem Verlauf und komplexerer Randgestaltung geschnitten, wie weiter unten genauer erläutert. Die Schnittrichtung der Streifen verläuft dabei, wie auch Fig. 4(b) zu entnehmen ist, parallel zur Laufrichtung der Bahnen 40, 42.

Von der Schneideeinrichtung 34 werden die geschnittenen Bahnen 40, 42 zu einer Abführeinrichtung 36 geleitet, in der abwechselnd ein Teil der Papierstreifen (hier der Streifen 44B) und ein komplementärer Teil der Folienstreifen (hier die Folienstreifen 46A und 46C) abgezogen und zu gegenüberliegenden Seiten hin abgeführt werden. In Ausgestaltungen, in denen die Bahnen 40,42 in der Einlaufeinrichtung 32 schwach verklebt werden, muss die Verklebung natürlich so ausgeführt sein, dass die geschnittenen Streifen in der Abführeinrichtung 36 problemlos wieder voneinander getrennt und die gewünschten Steifen abgeführt werden können.

Nach dem Abführschritt verbleiben die Papierstreifen 44A, 44C und, komplementär dazu, der Folienstreifen 46B, wie in Fig. 4(c) gezeigt. Aufgrund des deckungsgleichen Schnitts von Papier- und Folienbahn 40,42 passt der Folienstreifen 46B genau in die Lücke zwischen den Papierstreifen 44A, 44C. Bei einer größeren Anzahl an Streifen entstehen entsprechend mehrere Lücken in der einen Bahn, in die die komplementären Streifen der anderen Bahn wegen des deckungsgleichen Schnitts genau hineinpassen.

Nunmehr werden in einer Zusammenführungseinrichtung 38 die Papierstreifen 44A, 44C und der Folienstreifen 46B Stoß an Stoß zusammengeführt, wie in Fig. 4(d) gezeigt. Die zusammengeführten Streifen werden auf einer mit Klebstoff 22 beschichteten Kaschierfolie 20 fixiert, und bilden dort die gewünschte flächige Kernschicht 12, wie in Fig. 4(e) illustriert.

Oft ist es gewünscht, auch auf der gegenüberliegenden Seite der Kernschicht 12 eine Kaschierfolie 20' aufzubringen, um einen beidseitig abgedeckten Folienkern zu erhalten (Fig. 2).

Durch diese Verfahrensschritte entsteht ein Wertdokumentsubstrat 48 mit einer flächigen Kernschicht 12, in dem Stoß an Stoß nebeneinander angeordnete Teilbereiche 44A, 44C aus Papier und Teilbereiche 46B aus Folienmaterial vorliegen. Die Papierbereiche 44A, 44C und die Folienbereiche 46B sind im Rahmen dieser Anmeldung auch oft als Papierkern bzw. Folienkern der Kernschicht bezeichnet. Nachfolgend kann das Wertdokumentsubstrat 48 in üblicher Weise weiteren Bearbeitungsschritten, wie etwa Drucken oder Prägen, unterworfen werden und die Einzelnutzen werden schließlich vereinzelt, um die fertigen Wertdokumente zu erhalten.

Der Folienkern 46B der flächigen Kernschicht 12 kann insbesondere transparent oder zumindest bereichsweise transparent sein. Im einfachsten Fall handelt es sich bei dem Folienkern 46B sogar nur um eine transparente Folie. Der Folienkern 46B kann vorteilhaft auch bereits zumindest bereichsweise bedruckt oder mit transparenten oder nichttransparenten Sicherheitselementen, wie etwa Hologrammen, Mikrospiegeln, Volumenhologrammen, Elementen mit betrachtungswinkelabhängigem Farbwechsel, Sicherheitsdruckelementen, Effektpigmenten, wie etwa optisch variabler Tinte (OVI), und dergleichen ausgestattet sein. Papierstreifen und Folienstreifen können in diesem Fall mit Vorteil zu einander registriert werden, so dass beispielsweise bestimmte Sicherheitselemente des Folienkerns 46B innerhalb eines Einzelnutzens stets an derselben Position erscheinen. Vor der Kaschierung der Kaschierfolie 20, 20' kann als Manipulationsschutz ein überlappender Aufdruck, insbesondere ein Sicherheitsdruck, auf die Kernschicht, also über beide Kernschichtmaterialien 14,16 aufgebracht werden. Alternativ oder zusätzlich kann auch die Kaschierfolie 20, 20' solche oder weitere Sicherheitselemente auf der späteren Innen- oder Außenseite enthalten.

Im Ausführungsbeispiel der Figuren 3 und 4 wurden Papier und Folie als Bahnen bereitgestellt. In anderen Gestaltungen können Papier und/ oder Folie auch bereits in Streifen geschnitten bereitgestellt werden. Insbesondere teure hochveredelte Folien lassen sich kostengünstiger einbringen, wenn sie bereits vorher in Streifen geschnitten werden. Vorteilhaft werden diese Streifen über dem Papier liegend ebenfalls auf beiden Seiten leicht abgeschnitten, damit die Ränder der später gegeneinander fixierten Papier- und Folienstreifen exakt aneinanderpassen. Die Breite und gegebenenfalls die Form der Folienstreifen soll somit möglichst exakt und im Register der Breite und gegebenenfalls der Form der ausgeschnittenen Papierstreifen entsprechen. Insbesondere wenn im Endprodukt vergleichsweise breite Kernfolienstreifen gewünscht sind, kann zur Kostenminimierung auch das Papier mit Vorteil streifenweise bereitgestellt werden.

Auch wenn die genauer beschriebenen Ausführungsbeispiele als Kernschichtmaterialien Papier und Folie verwenden, ist die Erfindung nicht auf diese Kombination von Kernschichtmaterialien beschränkt. Vielmehr kann es sich bei den Kernschichtmaterialien beispielsweise bereits jeweils selbst um einen Verbund, insbesondere um einen Folie/Folie-, Folie/Papier- oder Papier/Papier-Verbund handeln, wie weiter oben genauer erläutert.

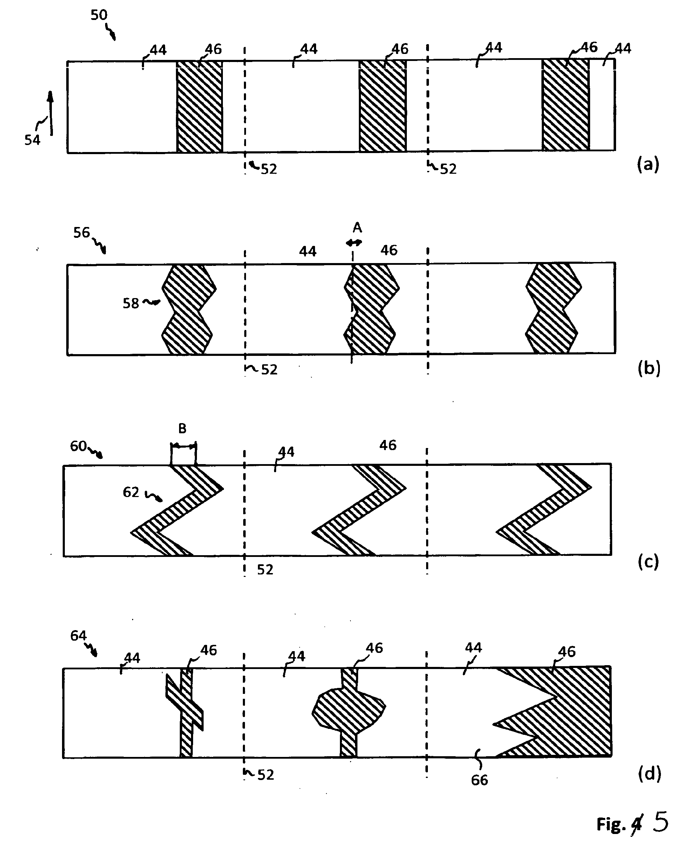

In Fig. 5 werden verschiedene vorteilhafte Streifenformen für eine Kernschichtbahn mit drei Nutzen in Bahnquerrichtung illustriert. Zunächst zeigt die Fig. 5(a) in Aufsicht einen Ausschnitt einer Kernschichtbahn 50 nach der grundsätzlich bereits beschriebenen Erfindungsvariante, bei der die Papierbahn 40 (bzw. allgemein ein erstes Kernschichtmaterial) und die Folienbahn (bzw. allgemein ein zweites Kernschichtmaterial) in parallele Streifen geschnitten sind. Die Figur zeigt die Bahnen nach dem Zusammenführen der geschnittenen parallelen Papier- und Folienstreifen 44, 46 und entspricht somit der in Fig. 4(d) im Querschnitt gezeigten Situation. Die Lage der drei in Bahnquerrichtung angeordneten Nutzen ist durch gestrichelte Linien 52 angedeutet, die Laufrichtung und die endlose Erstreckung der Kernschichtbahn 50 durch den Pfeil 54.

Bei der Variante nach Fig. 5(a) können die Papier- und Folienbahn sehr einfach geschnitten werden, beispielsweise mit einem entsprechenden Messersatz der Schneideeinrichtung 34. Nachteilig kann bei dieser Variante sein, dass im Endprodukt an der Grenze zwischen Papier- und Folienstreifen aufgrund der endlichen Schnittbreite eine mechanische Schwachstelle in Form eines schmalen Schnittspaltes entstehen kann. Je nach Design kann das fertige Wertdokument dann dazu neigen, an dieser Stelle abzuknicken.

Aus Gründen der mechanischen Stabilisierung sowie auch aus Gründen eines attraktiveren Designs ist es daher vorteilhaft, komplexere Streifenformen zu verwenden, bei denen, wie in Fig. 5(b) illustriert, die Streifengrenzen 58 in der Kernschichtbahn 56 nicht durch parallele Linien gegeben sind, sondern bei denen sich die Papier- und Folienstreifen 44, 46 beispielsweise in ihrer Breite ändern. Für die mechanische Stabilisierung genügt dabei in der Regel eine wesentlich kleinere Breitenänderung als in der schematischen Figur gezeigt. Beispielsweise kann der Folienkern 46 eine mittlere Breite von 20 mm haben, wobei links und rechts der Rand lediglich z.B. ein leichtes Zackenmuster mit einer Amplitude A von 2 mm aufweist. Wie stark für eine ausreichende mechanische Stabilisierung von einfachen parallelen Schnittlinien abgewichen werden muss, hängt dabei von den verwendeten Kernschichtmaterialien und den Schnittparametern ab, so dass der Fachmann diese letztlich durch Versuch ermitteln muss.

Zur Erhöhung der mechanischen Stabilität können entstehende Schnittspalte auch mit einem geeigneten Klebstoff aufgefüllt werden. Es bietet sich an, diese Spaltauffüllung mittels Düsentechnologie zu verwirklichen. Hierzu wird beispielsweise eine Endlosdüse über einem Folienstreifen 46 platziert und vorzugsweise ein niedrigviskoser 2K-LF Klebstoff auf den Folienstreifen aufgebracht. Der Klebstoff verfließt und wird zudem bei der direkt nachfolgenden Kaschierung mit der Deckfolie 20 in den Schnittspalt gepresst, wo er aushärtet und wegen der zusätzlichen Kantenverklebung (Papier/Folie) und der Hohlraumversiegelung zur Stabilität des Substrats beiträgt.

In anderen Gestaltungen ist vorgesehen, dass sich die Breite B der Folienstreifen 46 nicht oder kaum ändert, dass die Streifen 46 aber in der Kernschichtbahn 60 eine Schlangen- oder Zackenlinie 62 bilden, wie in Fig. 5(c) illustriert. Auch durch solche Gestaltungen wird eine erhöhte mechanische Stabilität erreicht, da die Schlangen- oder Zackenlinien 62 einem Abknicken der Einzelnutzen stark entgegenwirken.

Fig. 5(d) zeigt eine Kernschichtbahn 64 mit weiteren komplexen Streifenformen und illustriert, dass auch unterschiedliche Streifenformen in Bahnquerrichtung verwendet werden können. Während die bisher beschriebenen Nutzen jeweils einen kleineren Folienstreifen 46 kombiniert mit größeren Papierstreifen 44 zeigen, illustriert der Nutzen 66 der Kernschichtbahn 64, dass auch gleiche Flächenanteile von Papier- und Folienstreifen 44, 46 möglich sind. In manchen Gestaltungen kann es auch von Vorteil sein, einen Nutzen mit einem größeren Flächenanteil an Folienstreifen als an Papierstreifen auszubilden.

In vorteilhaften Varianten werden die Kernschichtmaterialien und der Streifenschnitt in ihrer relativen Position zueinander gepassert. Beispielsweise ist bei der Herstellung von Banknoten die Position der späteren Banknotennutzen im Papier unter anderem durch ein üblicherweise vorhandenes Wasserzeichen vorgegeben. Für nicht gleichförmige Streifen, wie etwa die zackenförmigen Streifenmuster der Fig. 5(c), ist es dann bevorzugt, wenn die zackenförmigen Schnittlinien in allen Nutzen gleich aussehen, so dass jeder Nutzen oben eine nach rechts weisende Zacke und unten eine nach links weisende Zacke aufweist. Um den Schnitt in Längsrichtung auf das Papier zu passern, können über einen Sensor beispielsweise auf das Papier aufgedruckte Marken oder ein Wasserzeichen ausgelesen und der Schnittverlauf in der Schneideeinrichtung entsprechend gesteuert werden.

Zusätzlich oder alternativ kann gewünscht sein, dass beispielsweise bei einem mit zusätzlichen Sicherheitsmerkmalen ausgestatteten Folienstreifen dieser zu den Papierstreifen gepassert ist. Beispielsweise könnte der Folienstreifen ein Prägehologramm aufweisen, das abwechselnd eine Wertzahl und ein Portrait zeigt, wobei das Portrait immer oben und die Wertzahl immer unten im Banknotennutzen vorliegen soll. Die Passerung des Folienstreifens zu den Papierstreifen kann nun entweder im Rahmen des beschriebenen Verfahrens erfolgen, oder Papier und Folie können bereits gepassert übereinanderliegend bereitgestellt werden, beispielsweise durch eine Rolle, in der Papier- und Folienlagen bereits abwechselnd und gepassert vorliegen. Dazu ist im Prinzip nicht anders zu verfahren als bei einer registrierten Kaschierung, nur dass Papier und Folie nicht oder zumindest nur sehr schwach und wieder lösbar verklebt werden. Der Klebstoff wird dazu vorteilhaft auf derjenigen Substratseite aufgebracht, die später abgezogen wird, um die spätere Kaschierverbundqualität nicht negativ zu beeinflussen. Ein leichtes Verkleben kann für den weiteren Prozess durchaus vorteilhaft und über die Passerung hinaus stabilisierend wirken.

Zurückkommend auf die Darstellung der Fig. 3 wird vorteilhaft der Schnitt in der Schneideeinrichtung 34 sowie das Entfernen der überschüssigen Folien und Papierbahnen in der Abführeinrichtung 36 möglichst unmittelbar vor dem Kaschierspalt der Zusammenführungseinrichtung 38 durchgeführt, um nach dem Schnitt eine nachteilige Bewegung der Bahnen 40, 42 zueinander zu vermeiden. Zu diesem Zweck kann mit Vorteil auch eine Fixierwalze, beispielsweise eine adhäsive Gummiwalze oder dergleichen, oder ein Fixierspalt, beispielsweise in Form von zwei Walzen, zwischen denen die Substratbahnen laufen, vorgesehen sein.

Direkt nach dem Schnitt und dem Entfernen der überschüssigen Folien und Papierbahnen können die lose nebeneinander laufenden Substratbahnen auch mittels einer dünnen Klebefolie, beispielsweise eines streifenförmigen Klebeetiketts fixiert werden, welche quer zur Laufrichtung und ähnlich wie bei einem Etikettenspender auf die laufende Bahn aufgebracht wird. Diese Folienstreifen werden dabei vorteilhaft an den späteren Bogenkanten quer zur Laufrichtung appliziert und werden beim Randbeschnitt entfernt. Dieses Verfahren empfiehlt sich insbesondere dann, wenn die Arbeitsschritte Schnitt (Schneideeinrichtung 34) und Kaschierung (Zusammenführungseinrichtung 38) räumlich weit voneinander entfernt liegen oder Schnitt/Trennwicklung und Kaschierung in getrennten Arbeitsgängen erfolgen müssen.

Insbesondere bei einfachen parallelen Streifenformen kann auch mittels einer entsprechenden Führung der Streifen vor der Kaschierung einer unerwünschten Bewegung der Streifen zueinander entgegengewirkt werden.

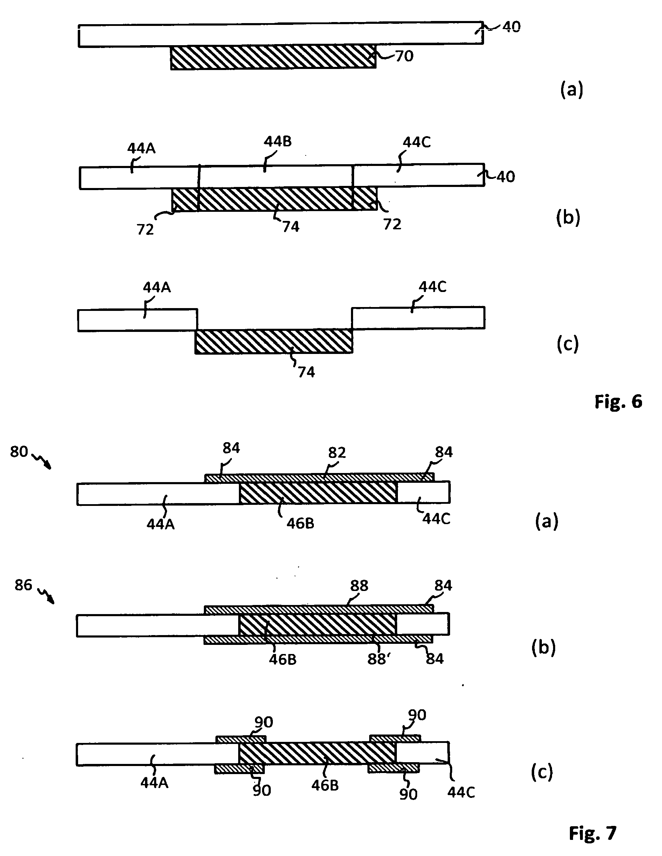

Vor allem bei der Verwendung von teuren Folien, wie etwa Hologrammfolien, kann es wünschenswert sein, möglichst wenig Folienmaterial zu verbrauchen. In einer Abwandlung des in den Figuren 3 und 4 illustrierten Prozesses wird dazu die Folienbahn 70 nur wenig breiter als die zu schneidenden Streifen bereitgestellt, wie in Fig. 6(a) dargestellt. Der Ablauf des Verfahrens ist in Figuren 6(a) bis (c) illustriert, die jeweils Querschnitte der Papier- und Folienbahn in Zwischenstadien bei der Herstellung der Kernschichtbahn zeigen, die den Figuren 4(a) bis (c) entsprechen.

Wie in Fig. 6(b) zu erkennen ist der Verschnitt 72 der Folie 70 nach dem gleichzeitigen und deckungsgleichen Schnitt der Bahnen 40, 70 wesentlich geringer als bei der Herstellungsvariante nach Fig. 4. Nach dem Abführen der nicht weiterverwendeten Streifenteile 44B und 72 verbleiben die komplementären Papierstreifen 44A, 44C und der Folienstreifen 74, wie in Fig. 6(c) gezeigt. Nachfolgend verläuft das Herstellungsverfahren wie bereits bei Fig. 4 beschrieben. Für eine Kernschichtbahn mit mehreren in Querrichtung angeordneten Nutzen läuft diese Vorgehensweise darauf hinaus, dass das Folienmaterial in Form mehrerer Streifen mit jeweils etwas größerer Breite als die späteren Streifen im fertigen Substrat bereitgestellt wird, so dass die Streifen noch an beiden Seiten deckungsgleich mit den Schnitten im Papier beschnitten werden können.

Fig. 7 illustriert weitere vorteilhafte Varianten eines fertigen Wertdokumentsubstrats im Querschnitt. Das Wertdokumentsubstrat 80 der Fig. 7(a) entspricht weitgehend dem Endprodukt des Verfahrens der Figuren 3 und 4, bei dem eine flächige Kernschicht aus nebeneinanderliegenden Teilbereichen aus Papier 44A, 44C bzw. aus Folie 46B besteht und der Folienkern 46B einseitig mit einer Kaschierfolie 82 abgedeckt ist. Der Kaschierkleber ist in den Darstellungen der Fig. 7 der Einfachheit halber nicht gezeigt. Im Unterschied zu den Gestaltungen der Figuren 3 und 4 ist die Kaschierfolie 82 bei der Ausgestaltung der Fig. 7(a) nicht vollflächig, sondern nur bereichsweise aufgebracht, nämlich über dem Folienkern 46B mit einem Überlapp 84 über die angrenzenden Papierbereiche.

In ähnlicher Weise ist das Wertdokumentsubstrat 86 der Fig. 7(b) eine Abwandlung der Ausgestaltung der Fig. 2, bei der die Kaschierfolien 88, 88' beidseitig nur bereichsweise aufgebracht sind und zwar wiederum über dem Folienkern 46B mit einem Überlapp 84 über die angrenzenden Papierbereiche.

Wie in Fig. 7(c) illustriert, kann die beidseitig aufgebrachte Kaschierfolie 90 auch nur jeweils über der Grenze zwischen Papiermaterial 44A, 44C und Folienmaterial 46B aufgebracht sein. Selbstverständlich kann eine solche Aufbringung auch bei Gestaltungen mit nur einseitig aufgebrachter Kaschierfolie vorgesehen sein.

Bei dem beschriebenen Herstellungsverfahren verlaufen die Folienbereiche in der flächigen Kernschicht durchgehend von der Substratunterseite zur Substratoberseite, wie beispielsweise in den Aufsichten der Fig. 5 illustriert. Wird aus designerischen Gründen kein durchgehender Bereich gewünscht, sondern nur ein kleineres Fenster, so kann das Wertdokumentsubstrat natürlich im Bereich des Folienkerns bereichsweise mit einer opaken, beispielsweise einer weißen opaken Farbe überdruckt werden, so dass ein Betrachter auf den ersten Blick auch in diesem Bereich Papier vermutet. Auf diese Weise lassen sich insbesondere in einem Streifen auch mehrere und nicht zusammenhängende Fensterbereiche sowie Fensterbereiche mit filigranen Randmotiven imitieren.

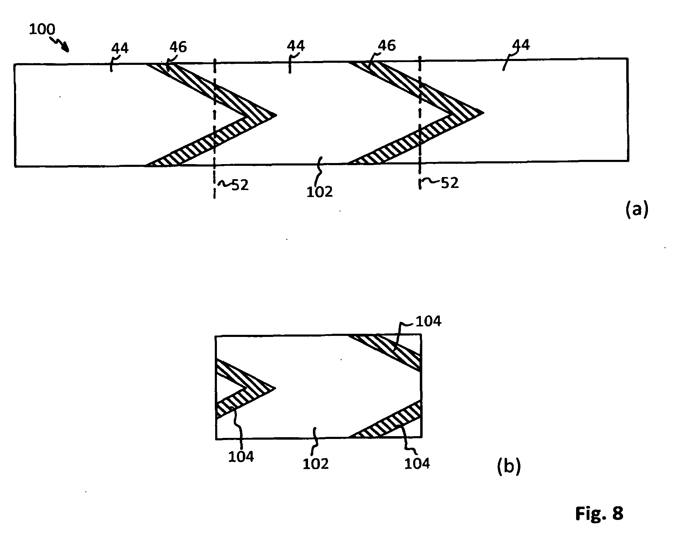

Mit Bezug auf die Darstellung der Fig. 8 können die Streifen in der Kernschicht auch so ausgebildet sein und die Einzelnutzen so geschnitten werden, dass trotz durchgehender Streifen 44, 46 in der Kernschichtbahn 100 (Fig. 8(a)) in den vereinzelten Einzelnutzen 102 (Fig. 8(b)) keine von der Oberseite zur Unterseite durchgehenden Streifen vorliegen. Dazu werden die Streifen in der Scheideeinrichtung 34 so geschnitten, dass zumindest ein Teil der Streifen (hier die Streifen 46) vollständige die Grenze 52 zwischen nebeneinander angeordneten Nutzen 102 überquert. Bei der Vereinzelung werden solche Streifen dann in mehrere nicht zusammenhängende Teilbereiche 104 zerlegt, wie in Fig. 8(b) illustriert.

### Bezugszeichenliste

- 10: Folienverbundbanknote
- 12: flächige Kernschicht
- 14, 16: Kernschichtmaterialien
- 18: Bereich der Kernschichtfolie
- 20, 20': Deckfolien
- 22: Kaschierkleber
- 30: Herstellungsvorrichtung
- 32: Einlaufeinrichtung
- 34: Schneideeinrichtung
- 36: Abführeinrichtung
- 38: Zusammenführungseinrichtung
- 40: Papierbahn
- 42: Folienbahn
- 44, 44A, 44B, 44C: Streifen der Papierbahn
- 46, 46A, 46B, 46C: Streifen der Folienbahn
- 48: Wertdokumentsubstrat
- 50: Kernschichtbahn
- 52: Grenze der Einzelnutzen
- 54: Laufrichtung
- 56: Kernschichtbahn
- 58: Streifengrenzen
- 60: Kernschichtbahn
- 62: Streifen in Form einer Zackenlinie
- 64: Kernschichtbahn
- 66: Nutzen
- 70: Folienbahn
- 72: Verschnitt
- 74: Folienstreifen
- 80: Wertdokumentsubstrat
- 82: Kaschierfolie
- 84: Überlapp
- 86: Wertdokumentsubstrat
- 88, 88': Kaschierfolien
- 90: Kaschierfolie
- 100: Kernschichtbahn
- 102: Einzelnutzen
- 104: nicht zusammenhängende Teilbereiche

## Patentansprüche

1. Verfahren zum Herstellen eines Wertdokumentensubstrats mit einer flächigen Kernschicht, in der zumindest zwei unterschiedliche Kernschichtmaterialien in Teilbereichen nebeneinander angeordnet sind, wobei bei dem Verfahren
B) ein flächiges erstes Kernschichtmaterial und ein unterschiedliches, flächiges zweites Kernschichtmaterial bereitgestellt wird,
A) die flächigen ersten und zweiten Kernschichtmaterialien übereinander angeordnet werden, **dadurch gekennzeichnet, daß**
S) die übereinander angeordneten Kernschichtmaterialien gleichzeitig und mit deckungsgleichen Schnitten streifenförmig geschnitten werden,
E) ein Teil des geschnittenen ersten Kernschichtmaterials und ein komplementärer Teil des geschnittenen zweiten Kernschichtmaterials entfernt werden, und
F) die nicht entfernten komplementären Teile des ersten und zweiten Kernschichtmaterials auf eine Deckfolie aufgebracht und relativ zueinander fixiert werden, so dass das erste und zweite Kernschichtmaterial nebeneinander angeordnete Teilbereiche der flächigen Kernschicht des Wertdokumentensubstrats bilden.

2. Verfahren nach Anspruch 1, **dadurch gekennzeichnet, dass** im Schritt A) das flächige erste und zweite Kernschichtmaterial wieder lösbar verklebt werden.

3. Verfahren nach Anspruch 1 oder 2, **dadurch gekennzeichnet, dass** im Schritt B) als erstes Kernschichtmaterial ein opakes Kernschichtmaterial, insbesondere eine Papierbahn oder ein Papierbogen, bereitgestellt wird, und dass als zweites Kernschichtmaterial ein zumindest bereichsweise transparentes Kernschichtmaterial, insbesondere eine Folienbahn oder ein Folienbogen, bereitgestellt wird.

4. Verfahren nach wenigstens einem der Ansprüche 1 bis 3, **dadurch gekennzeichnet, dass** im Schritt B) die Kernschichtmaterialien jeweils als Rollenmaterial bereitgestellt werden und die Herstellung des Wertdokumentensubstrats in einem Rolle-zu-Rolle-Prozess erfolgt.

5. Verfahren nach wenigstens einem der Ansprüche 1 bis 4, **dadurch gekennzeichnet, dass** im Schritt F) die nicht entfernten komplementären Teile des ersten und zweiten Kernschichtmaterials auf die Deckfolie geklebt werden.

6. Verfahren nach wenigstens einem der Ansprüche 1 bis 5, **dadurch gekennzeichnet, dass** im Schritt F) die nicht entfernten komplementären Teile des ersten und zweiten Kernschichtmaterials Stoß an Stoß auf der Deckfolie fixiert werden.

7. Verfahren nach wenigstens einem der Ansprüche 1 bis 6, **dadurch gekennzeichnet, dass** im Schritt S) die übereinander angeordneten Kernschichtmaterialien mit Messern oder mittels Laserstrahlung geschnitten werden.

8. Verfahren nach wenigstens einem der Ansprüche 1 bis 7, **dadurch gekennzeichnet, dass** im Schritt S) die übereinander angeordneten Kernschichtmaterialien in Form paralleler Streifen geschnitten werden.

9. Verfahren nach wenigstens einem der Ansprüche 1 bis 7, **dadurch gekennzeichnet, dass** im Schritt S) die übereinander angeordneten Kernschichtmaterialien in Form von Streifen mit nichtparallelen Streifenrändern, insbesondere in Form von Streifen mit zacken- oder wellenförmigen Streifenrändern, geschnitten werden.

10. Verfahren nach wenigstens einem der Ansprüche 1 bis 9, **dadurch gekennzeichnet, dass** im Schritt A) die Kernschichtmaterialien in ihrer relativen Position zueinander gepassert werden und/oder dass im Schritt S) die Position des Streifenschnitts und die Position einer oder beider Kernschichtmaterialien zueinander gepassert werden.

11. Verfahren nach Anspruch 10, **dadurch gekennzeichnet, dass** zur Passerung der Positionen der Kernschichtmaterialien und/oder des Streifenschnitts Positionsmarken auf zumindest einem der Kernschichtmaterialien ausgelesen, ausgewertet und zur Steuerung der die relativen Positionen der Kernschichtmaterialien in Schritt A) und/oder zur Steuerung der relativen Positionen von Streifenschnitt und Kernschichtmaterialien im Schritt S) verwendet werden.

12. Verfahren nach wenigstens einem der Ansprüche 1 bis 11, **dadurch gekennzeichnet, dass** im Schritt A) zumindest ein Kernschichtmaterial bereitgestellt wird, das bedruckt und/oder mit zumindest einem Sicherheitselement versehen ist.

13. Verfahren nach wenigstens einem der Ansprüche 1 bis 12, **dadurch gekennzeichnet, dass** in oder nach Schritt F) eine zweite Deckfolie auf die der ersten Deckfolie gegenüberliegende Fläche der flächigen Kernschicht aufgebracht, insbesondere aufgeklebt wird.

14. Verfahren nach wenigstens einem der Ansprüche 1 bis 13, **dadurch gekennzeichnet, dass** im Schritt F) zwischen einem ersten und einem zweiten Kernschichtmaterialstreifen ein Schnittspalt verbleibt, der vor, bei oder nach dem Aufbringen der Kernschichtmaterialien auf die Deckfolie mit einem Klebstoff aufgefüllt wird.

15. Verfahren nach wenigstens einem der Ansprüche 1 bis 14, **dadurch gekennzeichnet, dass** die flächige Kernschicht mit in einer Richtung durchgehenden Streifen aus dem ersten und einem zweiten Kernschichtmaterial gebildet wird.

16. Vorrichtung zur Durchführung des Verfahrens nach einem der Ansprüche 1 bis 15, mit
- einer Einlaufeinrichtung zum Übereinander-Anordnen der flächigen ersten und zweiten Kernschichtmaterialien,
- einer Schneideeinrichtung zum gleichzeitigen und deckungsgleichen Schneiden der übereinander angeordneten Kernschichtmaterialien in Streifen,
- einer Abführeinrichtung zum Entfernen eines Teils des geschnittenen ersten Kernschichtmaterials und eines komplementären Teils des geschnittenen zweiten Kernschichtmaterials, und
- einer Zusammenführungseinrichtung zum Zusammenführen und Fixieren der nicht entfernten komplementären Teile des ersten und zweiten Kernschichtmaterials auf der Deckfolie.

## Claims

1. A method for manufacturing a value document substrate with a flat core layer, in which at least two different core layer materials are arranged side by side in partial regions, wherein in the method
B) a flat first core layer material and a different, flat second core layer material is provided,
A) the flat first and second core layer materials are arranged above each other,
**characterized in that**
S) the core layer materials arranged above each other are cut in strip shape simultaneously and with congruent cuts,
E) one part of the cut first core layer material and a complementary part of the cut second core layer material are removed, and
F) the non-removed complementary parts of the first and second core layer material are applied to a cover foil and fixed relative to each other, so that the first and second core layer material form adjacently arranged partial regions of the flat core layer of the value document substrate.

2. The method according to claim 1, **characterized in that** in step A) the flat first and second core layer material are detachably adhesively bonded.

3. The method according to claim 1 or 2, **characterized in that** in step B) there is provided as the first core layer material an opaque core layer material, in particular a paper web or a paper sheet, and that there is provided as the second core layer material a core layer material that is transparent at least in certain regions, in particular a foil web or a foil sheet.

4. The method according to at least one of the claims 1 to 3, **characterized in that** in step B) the core layer materials are made available in each case as a roll material and the manufacture of the value document substrate is effected in a roll-to-roll process.

5. The method according to at least one of the claims 1 to 4, **characterized in that** in step F) the non-removed complementary parts of the first and second core layer material are adhesively bonded to the cover foil.

6. The method according to at least one of the claims 1 to 5, **characterized in that** in step F) the non-removed complementary parts of the first and second core layer material are fixed edge to edge on the cover foil.

7. The method according to at least one of the claims 1 to 6, **characterized in that** in step S) the core layer materials arranged above each other are cut with knives or by means of laser radiation.

8. The method according to at least one of the claims 1 to 7, **characterized in that** in step S) the core layers arranged above each other are cut in the form of parallel strips.

9. The method according to at least one of the claims 1 to 7, **characterized in that** in step S) the core layer materials arranged above each other are cut in the form of strips with non-parallel strip edges, in particular in the form of strips with serrated or wave-shaped strip edges.

10. The method according to at least one of the claims 1 to 9, **characterized in that** in step A) the core layer materials in are placed in mutual register in their relative position and/or that in step S) the position of the strip cut and the position of one or both core layer materials are placed in mutual register.

11. The method according to claim 10, **characterized in that** for placing in register the positions of the core layer materials and/or the strip cut, position marks on at least one of the core layer materials are read out, evaluated and employed for controlling the relative positions of the core layer materials in step A) and/or for controlling the relative positions of the strip cut and the core layer materials in step S).

12. The method according to at least one of the claims 1 to 11, **characterized in that** in step A) at least one core layer material is made available that is printed and/or equipped with at least one security element.

13. The method according to at least one of the claims 1 to 12, **characterized in that** in or after step F) a second cover foil is applied, in particular adhesively bonded, to the surface of the flat core layer disposed opposite the first cover foil.

14. The method according to at least one of the claims 1 to 13, **characterized in that** in step F) a cutting gap remains between a first and a second core-layer material strip, said gap being filled with an adhesive before, upon or after applying the core layer materials to the cover foil.

15. The method according to at least one of the claims 1 to 14, **characterized in that** the flat core layer is formed of strips of the first and a second core layer material that are continuous in one direction.

16. An apparatus for performing the method according to any of the claims 1 to 15, having
- an inlet device for arranging the flat first and second core layer materials above each other,
- a cutting device for simultaneous and congruent cutting of the core layer materials arranged above each other into strips,
- a discharge device for removing a part of the cut first core layer material and a complementary part of the cut second core layer material, and
- a joining device for joining and fixing the non-removed complementary parts of the first and second core layer material on the cover foil.

## Revendications

1. Procédé de fabrication d'un substrat pour documents de valeurs, ayant une couche noyau plane dans laquelle au moins deux matériaux de couche noyau différents sont juxtaposés les uns aux autres dans des zones partielles, cependant que, dans le procédé
B) un premier matériau, plan, de couche noyau et un deuxième matériau différent, plan, de couche noyau est mis à disposition,
A) les premier et deuxième matériaux plans de couche noyau sont superposés,
**caractérisé en ce que**
S) les matériaux de couche noyau superposés sont découpés en rubans simultanément et en découpes coïncidantes,
E) une partie du premier matériau de couche noyau découpé et une partie complémentaire du deuxième matériau de couche noyau découpé sont enlevées, et
F) les parties complémentaires non enlevées du premier et deuxième matériau de couche noyau sont placées sur un film de recouvrement et fixées relativement l'une à l'autre, de telle sorte que le premier et deuxième matériau de couche noyau constituent des zones partielles juxtaposées de la couche noyau plane du substrat pour documents de valeurs.

2. Procédé selon la revendication 1, **caractérisé en ce que**, à l'étape A), le premier et deuxième matériau, plan, de couche noyau sont collés de manière à nouveau détachable.

3. Procédé selon la revendication 1 ou 2, **caractérisé en ce que**, à l'étape B), en tant que premier matériau de couche noyau, c'est un matériau opaque de couche noyau qui est mis à disposition, en particulier une bande de papier ou une feuille de papier, et **en ce que**, en tant que deuxième matériau de couche noyau, c'est un matériau au moins par endroits transparent de couche noyau qui est mis à disposition, en particulier une bande de film ou une feuille de film.

4. Procédé selon au moins une des revendications de 1 à 3, **caractérisé en ce que**, à l'étape B), les matériaux de couche noyau sont respectivement mis à disposition en tant que matériau en rouleau et **en ce que** la fabrication du substrat pour documents de valeurs a lieu dans un processus de rouleau à rouleau.

5. Procédé selon au moins une des revendications de 1 à 4, **caractérisé en ce que**, à l'étape F), les parties complémentaires non enlevées du premier et deuxième matériau de couche noyau sont collées sur le film de recouvrement.

6. Procédé selon au moins une des revendications de 1 à 5, **caractérisé en ce que**, à l'étape F), les parties complémentaires non enlevées du premier et deuxième matériau de couche noyau sont fixées bout-à-bout sur le film de recouvrement.

7. Procédé selon au moins une des revendications de 1 à 3, **caractérisé en ce que**, à l'étape S), les matériaux de couche noyau superposés sont découpés avec des lames ou au moyen d'irradiation laser.

8. Procédé selon au moins une des revendications de 1 à 7, **caractérisé en ce que**, à l'étape S), les matériaux de couche noyau superposés sont découpés sous forme de rubans parallèles.

9. Procédé selon au moins une des revendications de 1 à 7, **caractérisé en ce que**, à l'étape S), les matériaux de couche noyau superposés sont découpés sous forme de rubans ayant des bords non parallèles de rubans, en particulier sous forme de rubans ayant des bords dentelés ou ondulés de rubans.

10. Procédé selon au moins une des revendications de 1 à 9, **caractérisé en ce que**, à l'étape A), les matériaux de couche noyau sont exactement ajustés dans leur position relative l'un par rapport à l'autre, et/ou **en ce que**, à l'étape S), la position de la découpe en rubans et la position d'un ou des deux matériaux de couche noyau sont exactement ajustées l'une par rapport à l'autre.

11. Procédé selon la revendication 10, **caractérisé en ce que**, pour l'ajustement exact des positions des matériaux de couche noyau et/ou de la découpe en rubans, des marques de position sont, sur au moins un des matériaux de couche noyau, lues, évaluées et utilisées pour la commande des positions relatives des matériaux de couche noyau à l'étape A) ou pour la commande des positions relatives de la découpe en rubans et des matériaux de couche noyau à l'étape S).

12. Procédé selon au moins une des revendications de 1 à 11, **caractérisé en ce que**, à l'étape A), au moins un matériau de couche noyau est mis à disposition, lequel est imprimé et/ou pourvu d'au moins un élément de sécurité.

13. Procédé selon au moins une des revendications de 1 à 12, **caractérisé en ce que**, pendant ou après à l'étape F), un deuxième film de recouvrement est placé, en particulier collé, sur la surface de la couche noyau plane faisant face au premier film de recouvrement.

14. Procédé selon au moins une des revendications de 1 à 13, **caractérisé en ce que**, à l'étape F), entre un premier et un deuxième ruban de matériau de couche noyau, il reste une fente de découpe qui, avant, pendant ou après le placement des matériaux de couche noyau sur le film de recouvrement, est comblée avec une colle.

15. Procédé selon au moins une des revendications de 1 à 14, **caractérisé en ce que** la couche noyau plane est constituée par des rubans qui s'étendent en continu dans une direction et sont constitués par le premier et par un deuxième matériau de couche noyau.

16. Dispositif destiné à l'exécution du procédé selon une des revendications de 1 à 15, comprenant
- un dispositif de réception pour la superposition des premier et deuxième matériaux de couche noyau plans,
- un dispositif de découpe pour la découpe en rubans simultanée et coïncidante des matériaux de couche noyau superposés,
- un dispositif d'évacuation pour l'enlèvement d'une partie du premier matériau de couche noyau découpé et d'une partie complémentaire du deuxième matériau de couche noyau découpé, et
- un dispositif de jonction pour la jonction et la fixation des parties complémentaires non enlevées du premier et deuxième matériau de couche noyau sur le film de recouvrement.
